Europäisches Patentamt

European Patent Office

Office européen des brevets

(11) Veröffentlichungsnummer: **0 344 503 B1**

# EUROPÄISCHE PATENTSCHRIFT

(45) Veröffentlichungstag der Patentschrift: **05.01.94**

(51) Int. Cl.⁵: **F16C 39/06**

(21) Anmeldenummer: **89108664.7**

(22) Anmeldetag: **13.05.89**

(54) **Magnetlagerung für eine schnell rotierende Vakuumpumpe.**

(30) Priorität: **01.06.88 DE 3818556**

(43) Veröffentlichungstag der Anmeldung:
**06.12.89 Patentblatt 89/49**

(45) Bekanntmachung des Hinweises auf die
Patenterteilung:
**05.01.94 Patentblatt 94/01**

(84) Benannte Vertragsstaaten:
**AT BE CH DE FR GB IT LI NL SE**

(56) Entgegenhaltungen:
**CH-A- 634 926**
**DE-A- 2 349 033**
**DE-A- 2 457 783**
**DE-A- 2 524 061**
**FR-A- 2 309 754**

(73) Patentinhaber: **Balzers-Pfeiffer GmbH**
**Emmeliusstrasse 33**
**D-35614 Asslar(DE)**

(72) Erfinder: **Bernardt, Helmut**
**Nebenstrasse 2 b**
**D-6330 Wetzlar 22(DE)**
Erfinder: **Bernhardt, Karl-Heinz**
**Am Wingert 1**
**D-6333 Braunfels 6(DE)**

## Beschreibung

Die Erfindung betrifft eine Magnetlagerung für eine schnell rotierende Vakuumpumpe nach dem Oberbegriff des ersten Patentanspruches, insbesondere für eine Turbomolekularpumpe. Eine solche Magnetlagerung ist z.B. aus der DE-A-2 457 783 bekannt.

Die meisten heute verwendeten Turbomolekularpumpen sind mit Kugellagern ausgerüstet, die entweder mit Öl oder Fett geschmiert werden. Der Nachteil ist, daß bei Stillstand der Pumpe, z.B. durch Stromausfall, Schmiermitteldämpfe auf die Hochvakuumseite vordringen und so den Rezipienten und die darin enthaltenen Bauteile verunreinigen. Magnetisch gelagerte Pumpen vermeiden diesen Nachteil.

Bekannt ist eine in fünf Achsen aktiv mit Hubmagneten geregelte Magnetlagerung, z.B. aus der DE-C-23 49 033, sowie eine in drei Achsen geregelte Magnetlagerung für eine Turbomolekularpumpe mit einem radial passiven Magnetlager aus der DE-A-33 41 716.

Diese Lagerungen sind wegen des notwendigen Aufwandes für je einen Regelkreis mit Sensor, Elektronik und Hubmagnet pro Achse teuer und aufwendig. Durch die Verfügbarkeit leistungsfähiger Magnetverbindungen auf der Grundlage von Seltenen Erden besteht heute die Möglichkeit, eine Magnetlagerung mit nur einem Regelkreis zu bauen.

In der DE-C-24 57 783 wird eine Lösung mit einem oberen passiven axial und radial wirkenden Lager und einem weiteren axial aktiven Lager, das ebenfalls radial passiv wirkt, vorgeschlagen. Während bei Bewegungen des Rotors in axialer Richtung die Kraft des oberen Lagers quadratisch mit abnehmendem Luftspalt weiter zunimmt, nimmt die Kraft des unteren Lagers bei konstantem Strom im Elektromagneten quadratisch mit der Luftspaltweite ab.

Dies führt zu erheblichen Problemen mit der Linearisierung zwischen den mit den Lagesensor gemessenen Luftspaltänderungen und den notwendigen Korrekturkräften, die quadratisch vom Strom und vom Luftspalt abhängen. Weiterhin ist die zentrierende Radialkraft der Axialkraft proportional und deshalb nicht konstant.

Aus der DE-C-25 24 061 ist eine Notlageranordnung für eine Magnetlagerung bekannt, die bei Normalbetrieb mit Hilfe eines axial wirkenden Hubmagneten auf Distanz zur Welle gehalten wird. Bei Notlagerbetrieb wird der untere Stator des Notlagers mit Hilfe einer Feder axial verschoben, so daß die Welle im Notlager zentriert wird.

Der vorliegenden Erfindung liegt die Aufgabe zugrunde, eine Magnetlagerung mit nur einem axialen Regelkreis mit einfacher Linearisierbarkeit zwischen Strom und Kraft sowie mit nur geringer Abhängigkeit zwischen zentrierender Radialkraft und axialer Verschiebung des Rotors vorzustellen. Dabei soll bei Versagen der aktiven Regelung eine Zentrierung der Welle im Notlager ohne zusätzliche Hilfsmittel erfolgen.

Die Lösung dieser Aufgabe erfolgt durch die kennzeichnenden Merkmale der Ansprüche 1 bis 3. Die Ansprüche 4 und 5 stellen weitere vorteilhafte Ausgestaltungen der Erfindungen dar.

Der Rotor, der in berührungsloser Zusammenwirkung mit den Statorelementen eine axiale Pumpwirkung erzeugt, ist in zwei passiven radial zentrierenden Magnetlagern gelagert. Eines der Lager ist auf der Hochvakuumseite der Pumpe angeordnet, das andere auf der Vorvakuumseite. Die Lager bestehen aus konzentrisch gleichpolig aufeinander geschichteten Ringen. Die inneren Ringe sind gehäusefest montiert, und die äußeren sind in den Rotor eingebaut. Der Arbeitspunkt des Magnetlagers ist so gewählt, daß der Rotorteil des Magnetlagers um einen Betrag, welcher klein ist gegen die Länge eines Magnetringes gegen den Statorteil zur Hochvakuumseite der Pumpe hin verschoben ist. Dadurch ergibt sich eine Kraft auf den Rotor zur Hochvakuumseite hin, die der Verschiebung zwischen Rotor und Stator proportional ist. Die radial zentrierende Kraft, die im labilen Punkt (ohne axialen Rotorversatz) am größten ist, wird durch diese Verschiebung nur wenig verringert.

Die von den passiven Radiallagern erzeugte Axialkraft wird von einem elektrischen Hubmagneten kompensiert, über dessen Polflächen eine auf der Rotorwelle befestigte Scheibe rotiert. Dazu wird die axiale Position des Rotors von einem Lagesensor gemessen, der den Strom im Hubmagneten mit Hilfe einer elektronischen Regeleinrichtung so regelt, daß der Rotor in der Schwebe gehalten wird.

Bei Hubmagneten mit veränderbarem Luftspalt ist die Hubkraft proportional dem Quadrat des Stromes und umgekehrt proportional dem Quadrat der Luftspaltweite. Eine Ausgestaltung der Radiallager nach Anspruch 1 mit konstanter destabilisierender Axialsteifigkeit erlaubt eine Regeleinrichtung, bei der nur die Nichtlinearitäten des Hubmagneten im Regler ausgeglichen werden müssen. Linearisierungen von Nichtlinearitäten der Axialkraft sind nicht erforderlich.

Besonders vorteilhaft ist die Anordnung des unteren Notlagers, bestehend aus zwei spielfrei gepaarte Wälzlagern zwischen Anzugsscheibe und unterem Magnetlager mit sowohl axialer als auch radialer Bewegungseinschränkung für die Welle. Die Anzugsscheibe mit der erfindungsgemäßen Nabe aus einem verschleißfesten gut gleitfähigen Material mit angeformtem Konus bildet zusammen mit dem unteren Wälzlager mit ausgeschliffenem Konus eine Zentriereinheit, die bei Versagen des Elektromagneten durch die nach oben gerichtete Kraft der Magnetlager automatisch den Rotor im Notlager zentriert.

Die Anordnung der Notlagereinheit nach Anspruch 2 begrenzt das Axialspiel des Rotors auf einen kleinen Bereich $\Delta z_1 + \Delta z_2$, in dem der Regler bei externen Störungen stabil ist, d.h. den Rotor ohne Schwingungserzeugung wieder auf den axialen Arbeitspunkt zurückführt. Der Winkel $\alpha$ des Zentrierkonus wird so gewählt, daß

$$tg\,\alpha = \frac{\Delta z_1}{\Delta r}$$

ist. Hierbei ist $\Delta z_1$ der Abstand des konischen Notlageranschlages vom Arbeitspunkt und $\Delta r$ das radiale Spiel des Notlagers. Wird $tg\,\alpha$ größer, so wird das Radialspiel eingeschränkt; bei kleinerem Winkel wird die Zentrierung schlechter.

Zwischen Anzugsscheibe und Magnet wird ein Luftspalt gebildet, dessen Weite sich bei der Anordnung von Lagesensor und Wellenmutter, wie in Anspruch 5 beschrieben, besonders einfach einstellen läßt, wobei die Summe der Längen von Wellenmutter und Lagesensor gleich der Länge des elektrischen Hubmagneten ist. Auf diese Weise sind die Luftspalte zwischen Anzugsscheibe und Hubmagnet einerseits und zwischen Wellenmutter und Lagesensor andererseits gleich. Der Luftspalt zwischen Wellenmutter und Lagesensor läßt sich leicht mit Hilfe der Sensorspannung messen.

Die Anordnung mit nur einem einseitig wirkenden Hubmagneten ist einfach, kostengünstig und wegen des geringen Aufwandes an Elektronik auch sehr zuverlässig. Deshalb ist auch eine einfache Notstromversorgung mit kleinen Batterien möglich.

Die Anordnung des unteren Notlagers unmittelbar über der Anzugsscheibe bietet weitere Vorteile:

Die Wärmedehnung des Rotors hat wegen der kurzen Entfernung zum Sensor nur geringe Veränderungen des axialen Notlagerspiels zur Folge. Die bei Notlagerbetrieb auftretenden Radialkräfte verursachen geringere Wellenverbiegungen als bei einer Anordnung am Wellenende. Außerdem werden radial destabilisierende Kräfte, verursacht durch einen magnetischen Nebenschluß bei Einbau des Lagers in den Hubmagneten, vermieden.

Zum Antrieb der Pumpe wird ein radialkraftfreier Motor mit Luftspule, wie er in der DE-A-34 32 946 beschrieben ist, verwendet. Dadurch wird eine Schwächung der Radiallager durch destabilisierende Kräfte vermieden.

Zur Dämpfung von radialen Rotorschwingungen wird die in der DE-C-32 39 328 beschriebene Einrichtung verwendet.

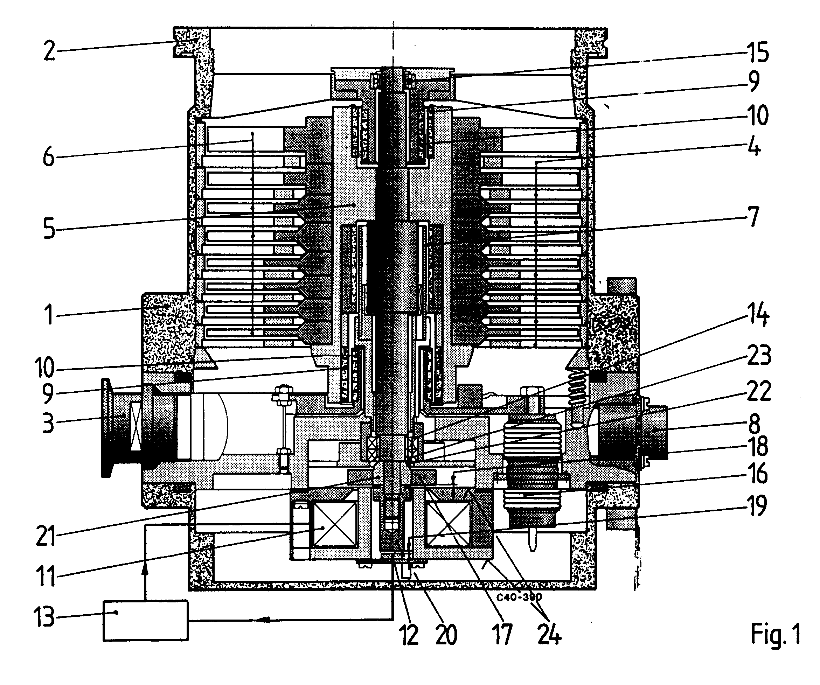

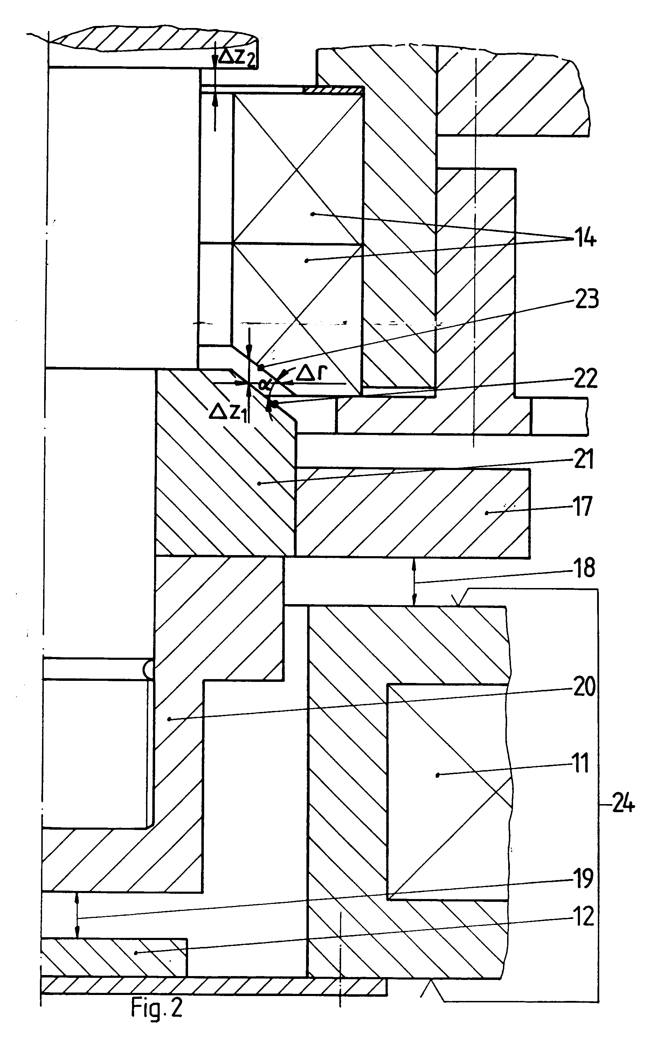

Anhand der Fig. 1 und 2 soll die Erfindung näher erläutert werden.

Wie Fig.1 zeigt, sind in dem Gehäuse 1, welches mit einem Hochvakuumflansch 2 und einem Vorvakuumflansch 3 augerüstet ist, die Statorschaufeln 4 montiert. Der magnetisch gelagerte Rotor 5 trägt die Rotorschaufeln 6, welche berührungslos zwischen den Statorschaufeln 4 umlaufen und so einen Pumpeffekt bewirken. Der Rotor 5 wird durch einen radialkraftfreien Motor 7 angetrieben. Die Stromversorgung des Motors und der Lageregelung des Rotors, wie sie unten näher beschrieben wird, erfolgt über den elektrischen Anschluß 8.

Der Rotor wird durch zwei passive Magnetlager radial zentriert, welche je aus einem Magnetlagerrotor 9 und einem Magnetlagerstator 10 bestehen. Das eine Magnetlager befindet sich auf der Hochvakuumseite, und das zweite auf der Vorvakuumseite. Stator und Rotor der Magnetlager bestehen aus konzentrisch gleichpolig aufeinandergeschichteten Ringen. Die inneren Ringe, welche den Magnetlagerstator 10 bilden, sind gehäusefest montiert, und die äußeren Ringe, welche den Magnetlagerrotor 9 bilden, sind in dem Rotor 5 eingebaut.

Der Arbeitspunkt der Magnetlager ist so gewählt, daß die Rotorringe 9 gegen die Statorringe 10 in Richtung Hochvakuumflansch 2 verschoben sind. Dadurch resultiert eine Kraft auf den Rotor 5 in Richtung Hochvakuumflansch 2. Diese axiale Kraft wird durch einen elektrischen Hubmagneten 11 kompensiert. Der Strom des Hubmagneten 11 wird durch einen Lagesensor 12, welcher die axiale Lage der Rotors 5 registriert, über eine elektronische Regeleinrichtung 13 gesteuert. Zwei Notlager 14 und 15, je eines auf der Vorvakuumseite und auf der Hochvakuumseite, sind für den Fall einer Störung der Magnetlagerung vorgesehen. Eine Einrichtung zur Dämpfung von Rotorschwingungen ist mit 16 bezeichnet und in der DE-PS 32 39 328 näher beschrieben.

Fig.2 zeigt einen vergrößerten Ausschnitt des unteren Lagerbereiches. Das Joch des Hubmagneten 11 wird durch eine auf die Rotorwelle montierte Scheibe gebildet, die hier mit Anzugsscheibe 17 bezeichnet ist. Der Luftpsalt zwischen der Anzugsscheibe 17 und dem Hubmagneten 11 ist mit 18, und der Luftspalt zwischen der Wellenmutter 20 und dem Sensor 12 ist mit 19 bezeichnet. Die Anzugsscheibe 17 ist über eine Nabe 21 mit der Rotorwelle verbunden. Diese Nabe 21 der Anzugsscheibe 17 ist auf der dem unteren Notlager 14 gegenüberliegenden Seite mit einem Konus 22 versehen, welcher zusammen mit dem Innenkonus 23 des unteren Notlagers 14 eine Zentriereinheit bildet.

Durch die Anordnung von Hubmagnet 11 und Lagesensor 12 nach Anspruch 5 ergibt sich eine einfache Montage. Zunächst stellt man die Welle axial mit einer Hilfsvorrichtung um die Luftspaltweite tiefer als der vorgesehene Arbeitspunkt und zentriert den Magneten in dieser Stellung. Anschließend wird mit dem Lagesensor 12 der vorgesehene Luftspalt 19 eingestellt. Durch die erfindungsgemäße Anordnung von Hubmagnet 11 und Lagesensor 12 ist gewährleistet, daß der Luftspalt 18 gleich dem Luftspalt 19 zwischen Lagesensor 12 und Wellenmutter 20 ist.

## Patentansprüche

1. Magnetlagerung für eine schnell rotierende Vakuumpumpe mit radial zentrierenden passiven Magnetlagern (9,10), welche axial destabilisierende Kräfte und somit einen labilen Punkt verursachen, mit Dämpfungseinrichtungen gegen radiale Schwingungen, und mit einer elektronischen aktiven axialen Lageregelung und mit Lagesensor (12), Hubmagnet (11) und rotorfester Anzugsscheibe (17) als Joch für den Hubmagneten (11), dadurch gekennzeichnet, daß die radial zentrierende Kraft der passiven Magnetlager (9,10), bestehend aus inneren und äußeren Ringen, die konzentrisch und gehäusefest (10) bzw. auf einem Rotor (9) montiert sind, nur geringfügig von der axialen Rotorverschiebung abhängig ist, daß Notlager vorgesehen sind und die axiale Steifigkeit der Radiallager (9,10) in einem Bereich, welcher dem axialen Spiel $\Delta Z_1 + \Delta Z_2$ der Notlager (14,15) entspricht, konstant ist, der Arbeitspunkt des Rotors axial in Richtung des Hochvakuumflansches (2) in Bezug auf den labilen Punkt verschoben ist und die dadurch entstehende in dieselbe Richtung wirkende axiale Kraft durch Anzugskräfte des Hubmagneten (11) kompensiert wird und daß das untere Notlager (14) zwischen der Anzugsscheibe (17) des Hubmagneten (11) und dem unteren radial zentrierenden Magnetlager angeordnet ist und die Rotorbewegung bei Versagen des Hubmagneten (11) axial und radial begrenzt.

2. Magnetlagerung nach Anspruch 1, dadurch gekennzeichnet, daß das untere Notlager (14), aus zwei axialspielfrei gepaarten Wälzlagern besteht, deren axiale Steifigkeit groß gegen die negative Steifigkeit des passiven Radiallagers in axialer Richtung ist und daß das untere der beiden Wälzlager einen Innenkonus (23) enthält, der so geformt ist, daß im Arbeitspunkt des Magnetlagers die radiale Bewegungsfreiheit der Welle nicht eingeschränkt wird und eine Nabe (21) der Anzugsscheibe (17) mit einem Konus (22) das Gegenstück zu dem Innenkonus (23) bildet.

3. Magnetlagerung nach den Ansprüchen 1 und 2, dadurch gekennzeichnet, daß die über dem Hubmagneten (11) rotierende Anzugsscheibe (17) aus magnetischem Material und deren Nabe (21) aus unmagnetischem Material besteht.

4. Magnetlagerung nach Anspruch 3, dadurch gekennzeichnet, daß die unmagnetische Nabe (21) der Anzugsscheibe (17) aus einem verschleißfesten Material hergestellt ist, das zusammen mit dem Wälzlager-Innenring gute Gleiteigenschaften aufweist.

5. Magnetlagerung nach Anspruch 1, dadurch gekennzeichnet, daß der Hubmagnet (11) planparallele Flächen (24) senkrecht zu seiner Rotationssymmetrieachse hat, über dessen oberer Fläche in einem Abstand (18) die Anzugsscheibe rotiert und auf dessen Unterseite der Lagesensor (12) montiert ist, der den Abstand (19) zur Wellenmutter (20) mißt, wobei die Summe der Länge der Wellenmutter (20) und des vorstehenden Teils des Lagesensors (12) gleich der Länge des Hubmagneten ist.

## Claims

1. Magnetic bearing arrangement for a rapidly rotating vacuum pump with radially centring passive magnetic bearings (9, 10), which give rise to axially destabilising forces and thus an unstable point, damping devices against radial vibrations, an electronic active axial position regulating system, a position sensor (12), a lifting magnet (11) and an attracting disc (17), which is rigid with the rotor, as a yoke for the lifting magnet (11), characterised in that the radially centring force of the passive magnetic bearings (9, 10) consisting of inner and outer rings, which are mounted concentrically and rigidly with the casing (10) and on a rotor (9), respectively, is only slightly dependent on the axial rotor displacement, that emergency bearings are provided and the axial rigidity of the radial bearings (9, 10) in a range which corresponds to the axial play $\Delta Z_1 + \Delta Z_2$ of the emergency bearings (14, 15) is constant, the operating point of the rotor is displaced axially in the direction of the high-vacuum flange (2) in relation to the unstable point and the resulting axial force acting in the same direction is compensated by attractive forces of the lifting magnet (11), and that the lower emergency bearing (14) is arranged between the attracting disc (17) of the lifting magnet (11) and the lower, radially centring magnetic bearing and the rotor movement is limited axially and radially if the lifting magnet (11) fails.

**2.** Magnetic bearing arrangement according to claim 1, characterised in that the lower emergency bearing (14) consists of two rolling contact bearings which are paired without axial play and the axial rigidity of which is high with respect to the negative rigidity of the passive radial bearing in the axial direction, and that the lower of the two rolling contact bearings comprises an inner cone (23) which is shaped such that the radial freedom of movement of the shaft is not restricted at the operating point of the magnetic bearing, and a hub (21) of the attracting disc (17) forms with a cone (22) the counterpart to the inner cone (23).

**3.** Magnetic bearing arrangement according to claims 1 and 2, characterised in that the attracting disc (17) rotating above the lifting magnet (11) consists of magnetic material and its hub (21) of non-magnetic material.

**4.** Magnetic bearing arrangement according to claim 3, characterised in that the non-magnetic hub (21) of the attracting disc (17) is made of a wear-resistant material which, together with the inner ring of the rolling contact bearings, exhibits good anti-friction properties.

**5.** Magnetic bearing arrangement according to claim 1, characterised in that the lifting magnet (11) has plane-parallel faces (24) perpendicularly to its axis of rotational symmetry, above the upper face of which magnet the attracting disc rotates at a distance (18) and on the underside of which the position sensor (12) is mounted, which sensor measures the distance (19) from the shaft nut (20), the sum of the length of the shaft nut (20) and that of the projecting part of the position sensor (12) being equal to the length of the lifting magnet.

**Revendications**

**1.** Palier magnétique pour une pompe à vide tournant à grande vitesse comprenant des paliers magnétiques (9, 10) passifs de centrage radial qui donnent naissance à des forces axialement déstabilisantes et partant à un point instable, comprenant des dispositifs d'amortissement de vibrations radiales et un dispositif électronique de réglage de position axial actif ainsi qu'un capteur de position (12), un aimant de levage (11) et un disque d'attraction (17) solidaire du rotor et constituant une culasse pour l'aimant de levage (11), caractérisé par le fait que la force de centrage radial des paliers magnétiques (9, 10) passifs composés de bagues intérieures et extérieures concentriques qui sont solidaires du boîtier (10) ou sont montées sur un rotor (9), n'est que légèrement dépendante du déplacement axial du rotor, que des paliers de secours sont prévus et que la rigidité axiale des paliers radiaux (9, 10) est constante dans une zone qui correspond au jeu axial $\Delta Z_1 + \Delta Z_2$ des paliers de secours (14, 15), que le point de travail du rotor est décalé axialement en direction de la bride à vide poussé (2) par rapport au point instable et que la force axiale apparaissant ainsi et agissant dans la même direction est compensée par des forces d'attraction de l'aimant de levage (11) et que le palier de secours inférieur (14) est disposé entre le disque d'attraction (17) de l'aimant de levage (11) et le palier magnétique inférieur de centrage radial et limite le déplacement du rotor axialement et radialement en cas de défaillance de l'aimant de levage (11).

**2.** Palier magnétique selon la revendication 1, caractérisé par le fait que le palier de secours inférieur (14) est constitué de deux roulements appariés sans jeu axial dont la rigidité axiale est grande par rapport à la rigidité négative du palier radial passif en direction axiale et que le roulement inférieur contient un cône intérieur (23) qui est formé de telle manière que la liberté de déplacement radial de l'arbre ne soit pas limitée au point de travail du palier magnétique et qu'un moyeu (21) du disque d'attraction (17) forme avec un cône (22) le pendant du cône intérieur (23).

**3.** Palier magnétique selon les revendications 1 et 2, caractérisé par le fait que le disque d'attraction (17) qui tourne au-dessus de l'aimant de levage (11) est constitué d'un matériau magnétique tandis que son moyeu (21) est constitué d'un matériau non-magnétique.

**4.** Palier magnétique selon la revendication 3, caractérisé par le fait que le moyeu non-magnétique (21) du disque d'attraction (17) est constitué d'un matériau résistant à l'usure qui présente de bonnes propriétés de glissement avec la bague intérieure du roulement.

**5.** Palier magnétique selon la revendication 1, caractérisé par le fait que l'aimant de levage (11) possède des surfaces (24) à faces planes et parallèles perpendiculairement à son axe de symétrie de révolution, aimant au-dessus de la surface supérieure duquel tourne le disque d'attraction (17) à une distance (18) et sur le côté inférieur duquel est monté le capteur de position (12) qui mesure l'écartement (19) par rapport à l'écrou d'arbre (20), la somme de la longueur de l'écrou d'arbre (20) et de la partie saillante du capteur de position (12) étant égale à la longueur de l'aimant de levage.

Fig.1

Fig. 2